# FASCICULE DE BREVET EUROPEEN

(11) **EP 1 014 130 B1**
(45) Date de publication et mention de la délivrance du brevet: **22.10.2008**
(21) Numéro de dépôt: 99403265.4
(22) Date de dépôt: 23.12.1999
(51) Int. Cl.: G02B 6/38

(54) **Elément de connecteur optique à corps monobloc**
Einstückiges optisches Steckerelement
Single-element optical connector

(30) Priorité: 24.12.1998 FR 9816451
(43) Date de publication de la demande: 28.06.2000
(73) Titulaire: RADIALL, 93116 Rosny-Sous-Bois (FR)
(72) Inventeur: Valencia, Laurent, 38080 l'Isle d'Abeau (FR); Causse, Cyril, 69330 Pusignan (FR)
(74) Mandataire: Leszczynski, André

(56) Documents cités:
- EP-A- 0 366 346
- EP-A- 0 571 325
- EP-A- 0 819 960
- WO-A-95/35520

## Description

La présente invention concerne un élément de connecteur optique à corps monobloc.

On connaît par la demande WO 95/35520 un connecteur optique permettant le positionnement d'une fibre optique suivant différentes orientations angulaires.

On sait qu'une fibre optique comporte un coeur, qui est la partie dans laquelle un faisceau lumineux à transmettre se propage, et que ce coeur a une tolérance de centrage de l'ordre de 0,8 µm (pour les fibres monomode) dans la section de la fibre.

On sait, en outre, qu'une fibre optique se monte dans un élément de connecteur en étant fixée dans un fourreau appelé ferrule, fourreau dans lequel la fibre est généralement collée puis polie à son extrémité et qu'un tel montage induit une tolérance de centrage de l'ordre de 2 µm.

Par conséquent, la position du coeur d'une fibre optique par rapport à sa ferrule est sujette à un cumul de tolérances qui, lorsqu'il s'agit de connecter deux fibres entre elles, pose un problème car les coeurs en regard des deux fibres ont toutes les chances de ne pas coïncidera

Pour réduire ce risque de non-coïncidence, il est connu de procéder à une opération normalisée d'orientation, une fois la fibre résinée dans sa ferrule et son extrémité polie, et ceci de la manière suivante.

La fibre maintenue dans la ferrule est présentée en regard d'une fibre montée dans une fiche d'orientation. Dans cette fiche, la fibre présente une excentricité normalisée, c'est-à-dire que son coeur est décalé, par rapport au centre géométrique de la section extérieure de la ferrule de la fiche, d'une distance donnée dans une direction donnée.

La ferrule est présentée dans plusieurs positions angulaires différentes en regard de la fibre d'orientation. En général, ces positions sont au nombre de quatre ou six et sont espacées angulairement de 90° ou de 60°.

Un signal lumineux est transmis entre la fibre à orienter et la fibre de la fiche d'orientation et la position angulaire dans laquelle le signal est le mieux transmis est retenue comme orientation optimale.

La ferrule est ensuite immobilisée dans un élément de connecteur dans une position angulaire dans laquelle la fibre se trouve dans son orientation optimale, grâce à des moyens de blocage en rotation prévus dans l'élément de connecteur.

Ainsi, lorsque la fibre ainsi orientée est connectée à une autre fibre orientée dans les mêmes conditions, les coeurs des deux fibres en regard se trouvent dans un même secteur angulaire.

On sait, par ailleurs, que pour que deux éléments de connecteur accouplés assurent une bonne connexion optique de deux fibres, il est primordial que les faces frontales des deux fibres soient maintenues l'une en face de l'autre indépendamment des sollicitations mécaniques subies par les éléments de connecteurs accouplés, sollicitations qui peuvent notamment résulter d'une manipulation d'un ou des câbles optiques.

A cet effet, on utilise un manchon d'alignement pour les ferrules et l'on prévoit, dans chaque élément de connecteur, un agencement qui autorise un certain jeu de la fibre et de sa ferrule par rapport au reste de l'élément de connecteur, de sorte que les deux ferrules maintenues en regard l'une de l'autre par le manchon d'alignement à l'intérieur des deux éléments de connecteur accouplés forment un ensemble qui est apte à flotter à l'intérieur des corps accouplés des deux éléments de connecteur.

Une difficulté des éléments de connecteurs optiques réside dans la nécessité d'assurer le maintien angulaire des ferrules tout en autorisant leur flottement dans chaque élément de connecteur.

La présente invention vise à fournir un élément de connecteur qui surmonte cette difficulté, c'est-à-dire un élément de connecteur laissant un jeu suffisant à la ferrule mais permettant l'orientation de la fibre après résinage et polissage de cette dernière.

La présente invention a pour objet un élément de connecteur optique ayant une face d'accouplement avec un autre élément de connecteur optique et comprenant :
a) une ferrule destinée à recevoir la portion d'extrémité d'une fibre optique,
b) un porte-ferrule formant avec la ferrule un ensemble ferrule d'un seul tenant,
c) un corps recevant ledit ensemble ferrule et ouvert du côté de la face d'accouplement pour permettre l'introduction dudit ensemble ferrule,
d) un moyen élastique tendant à repousser vers l'extérieur du corps, en direction de la face d'accouplement de l'élément de connecteur, l'ensemble ferrule introduit dans le corps,
e) un moyen de blocage en rotation de l'ensemble ferrule par rapport au corps,
f) des formes d'encliquetage sur l'ensemble ferrule et
g) des formes d'encliquetage sur le corps,
caractérisé par le fait que les formes d'encliquetage du corps sont situées, par rapport au moyen élastique, du côté de la face d'accouplement et sont montées sur le corps de manière à pouvoir s'escamoter de manière réversible.

Au sens de la présente invention, on entend par face d'accouplement d'un élément de connecteur, son côté par lequel il se connecte à un autre élément de connecteur.

Dans un mode de réalisation particulier de l'invention, les formes d'encliquetage du corps sont supportées par des parties élastiquement déformables du corps.

Dans une variante préférée de ce mode de réalisation, les parties élastiquement déformables du corps supportant les formes d'encliquetage sont constituées par les extrémités libres de poutres élastiques découpées longitudinalement dans l'épaisseur de la paroi du corps.

On va maintenant expliquer pourquoi l'élément de connecteur selon l'invention permet de surmonter la difficulté résultant de la nécessité d'assurer le maintien angulaire de la ferrule tout en autorisant son flottement dans l'élément de connecteur.

On comprend qu'en cas de sollicitation mécanique, deux éléments de connecteur accouplés peuvent se déplacer légèrement l'un par rapport à l'autre, ce qui peut entraîner un léger basculement des ferrules relativement à leurs corps respectifs et que ce basculement se traduit par un débattement radial qui est important lorsqu'on se trouve à distance des faces frontales des deux ferrules mais qui est relativement faible lorsqu'on se trouve à proximité de ces faces frontales.

Selon l'invention, les formes d'encliquetage sont positionnées du côté de la face d'accouplement par rapport au moyen élastique, ce qui permet de les positionner le plus près possible des faces frontales en regard des deux fibres, et un jeu radial relativement faible entre les formes d'encliquetage suffit à conférer une grande liberté de mouvement à l'ensemble ferrule dans le corps de l'élément de connecteur, tout en maintenant son indexation angulaire.

En outre, le fait que les formes d'encliquetage se trouvent en avant du moyen élastique, c'est-à-dire du côté dudit moyen élastique le plus proche de la face d'accouplement, facilite l'accès auxdites formes d'encliquetage et notamment à celles du corps qui peuvent s'escamoter, ce qui permet de les désencliqueter pour réaliser l'orientation de la fibre en testant différentes positions angulaires de l'ensemble ferrule dans le corps.

Afin de réduire le nombre de pièces constituant l'élément de connecteur selon l'invention, les formes d'encliquetage du corps et de l'ensemble ferrule constituent, dans un mode de réalisation particulier de l'invention, une butée axiale qui limite le déplacement axial de l'ensemble ferrule dans le corps en direction de la face d'accouplement de l'élément de connecteur.

Dans ce mode de réalisation, le fait que les formes d'encliquetage prévues sur le corps puissent s'escamoter permet de monter l'ensemble constitué par la ferrule et son porte-ferrule dans le corps d'un seul tenant de l'élément de connecteur par simple engagement dudit ensemble dans le corps, par son ouverture située du côté de la face d'accouplement.

Dans le but de mieux faire comprendre l'invention, on va en décrire maintenant des modes de réalisation donnés à titre d'exemples non limitatifs, en référence au dessin annexé dans lequel :
- la figure 1 est une vue en perspective éclatée d'un élément de connecteur optique selon un premier mode de réalisation de l'invention,
- la figure 2A est une vue en coupe axiale de l'élément de connecteur de la figure 1 à l'état assemblé,
- la figure 2B est une vue analogue à la figure 2A,
- la figure 3 est une vue en coupe axiale analogue à la figure 2A du corps seul,
- la figure 4 est une vue en coupe selon IV-IV de la figure 3,
- la figure 5 est une vue de dessus de la figure 2, montrant l'élément de connecteur lorsqu'il est connecté à un autre élément de connecteur,
- la figure 6A est une vue à plus grande échelle du détail VI de la figure 5,
- la figure 6B est une vue de l'intérieur en perspective de l'extrémité d'une poutre,
- la figure 7 est une vue en perspective éclatée d'un élément de connecteur optique selon un deuxième mode de réalisation de l'invention,
- la figure 8A est une vue en coupe axiale de l'élément de connecteur de la figure 7 à l'état partiellement monté,
- la figure 8B est une vue analogue à la figure 8A,
- la figure 9 est une vue en coupe selon IX-IX de la figure 8A, après mise en place de la bague d'accouplement,
- la figure 10 est une vue en coupe axiale analogue à la figure 8A du corps seul,
- la figure 11 est une vue de dessus de la figure 10,
- la figure 12 est une vue en perspective de l'avant d'un outil d'orientation,
- la figure 13 est une vue en coupe axiale montrant l'outil d'orientation en cours d'introduction dans l'élément de connecteur pour agir sur les formes d'encliquetage afin de les escamoter,
- la figure 14 est une vue analogue à la figure 13 montrant l'outil agissant sur les formes d'encliquetage,
- la figure 15 est une vue analogue à la figure 6A d'un autre mode de réalisation de l'invention.

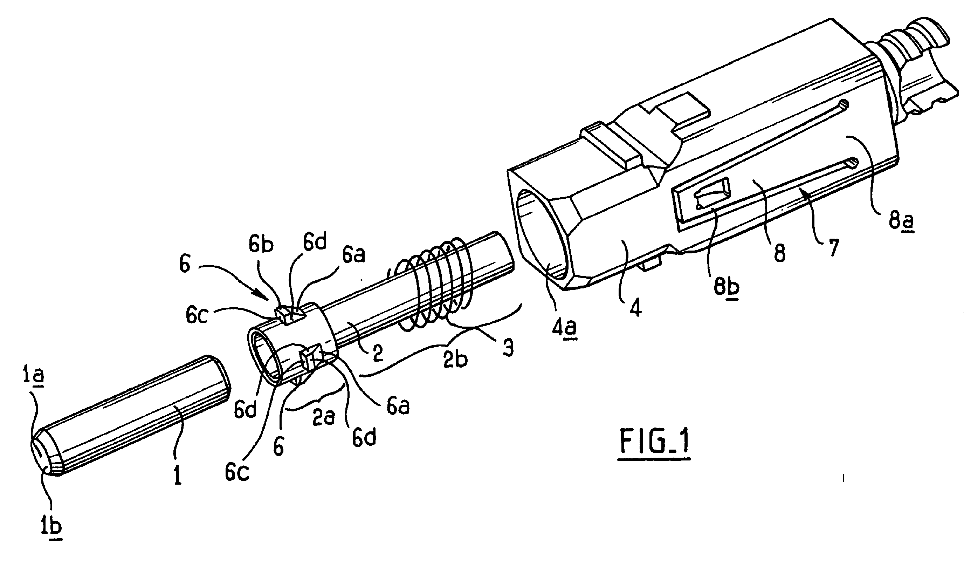

L'élément de connecteur représenté à la figure 1 comprend une ferrule 1, un porte-ferrule 2, un ressort hélicoïdal 3 et un corps 4.

La ferrule 1 est un fourreau comportant un canal axial 1a, le traversant de part en part, qui sert à maintenir la portion d'extrémité d'une fibre optique (non représentée) dont la face frontale se trouve à affleurement de la face de contact 1b de la ferrule.

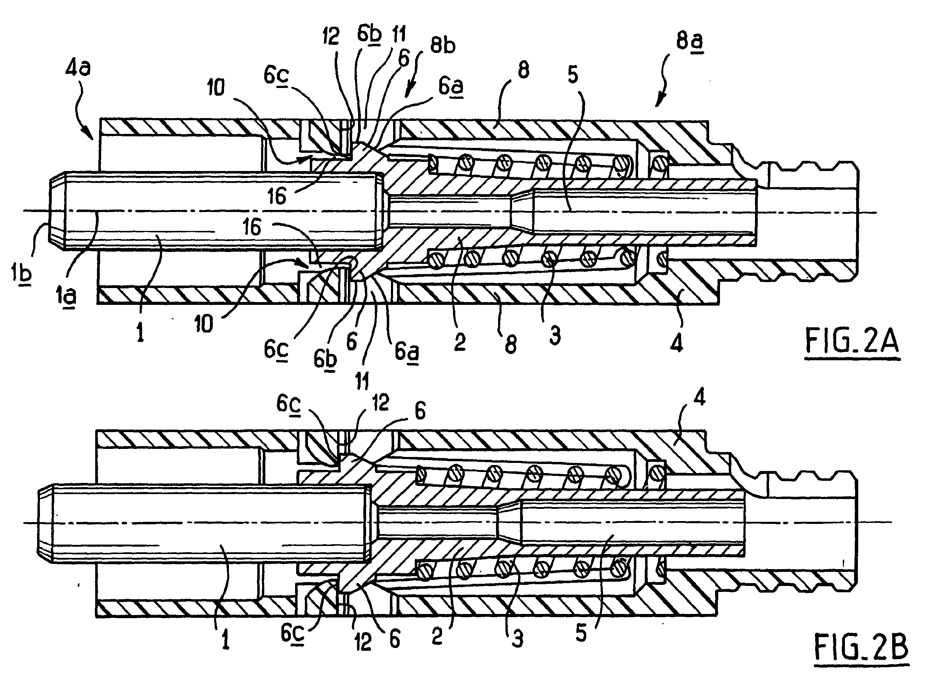

Le porte-ferrule 2 est une pièce réalisée en métal qui comprend une partie avant 2a destinée à recevoir la ferrule emmanchée dans un logement prévu à cet effet et une partie arrière 2b destinée à recevoir une portion de la fibre optique gainée (non représentée) engagée dans le porte-ferrule et collée dans son canal axial 5 (figures 2A, 2B).

La partie avant 2a du porte-ferrule est munie de quatre ergots 6 régulièrement répartis autour du porte-ferrule en étant espacés deux à deux d'un quart de tour.

Chaque ergot 6 comprend une partie arrière tronconique et une partie avant cylindrique, l'axe commun du cylindre et du cône dans lequel lesdits ergots sont inscrits étant le même que celui du porte-ferrule.

Chaque ergot 6 présente ainsi, de l'arrière vers l'avant, une rampe inclinée 6a, une face latérale 6b et une face frontale 6c ainsi que deux faces radiales 6d qui s'étendent sur toute la longueur de l'ergot.

Le corps 4 est celui d'un élément de connecteur de type SC. Il est réalisé d'un seul tenant et comporte une ouverture 4a du côté de la face d'accouplement de l'élément de connecteur (à gauche sur la figure 2).

Les détails de la forme extérieure du corps ne seront pas décrits ici.

On notera que ce corps comporte, découpées dans deux de ses parois latérales opposées 7, des poutres élastiques 8 solidaires du corps par leur extrémité arrière 8a et libres à leur extrémité avant 8b.

Chacune de ces poutres 8 peut se déformer radialement de façon élastique.

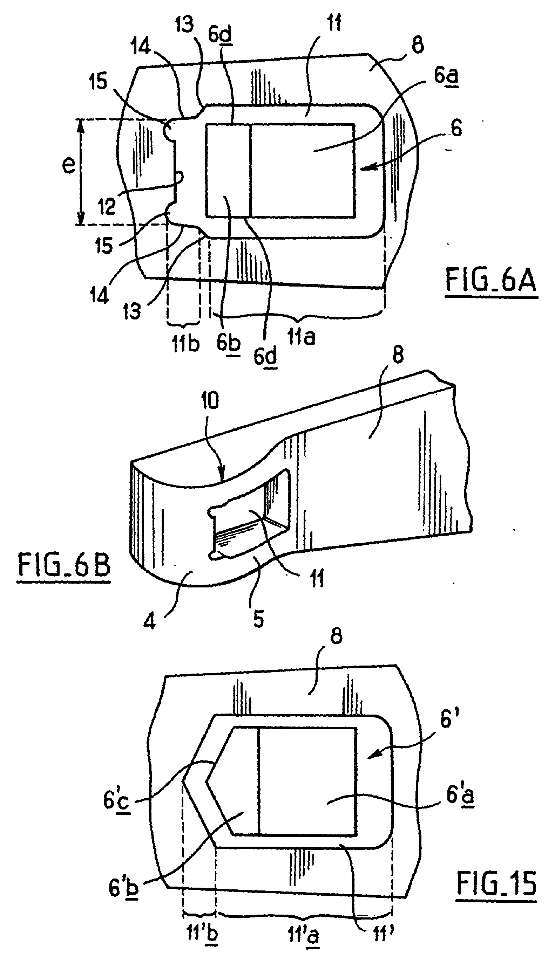

A son extrémité libre 8b, qui est mieux visible sur les figures 6A et 6B, la poutre comporte une forme d'encliquetage qui est destinée à coopérer avec l'un des ergots 6 du porte-ferrule.

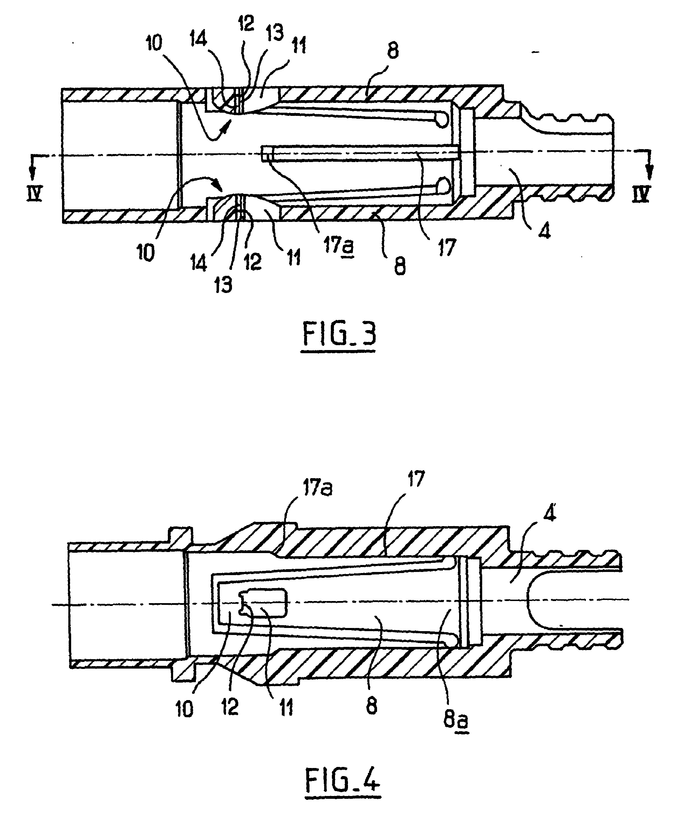

Cette forme d'encliquetage comprend un bossage 10 en saillie de la paroi latérale 7 à l'intérieur du corps, bossage qui est traversé par une ouverture radiale 11 dont la section est mieux visible sur les figures 4 et 6A.

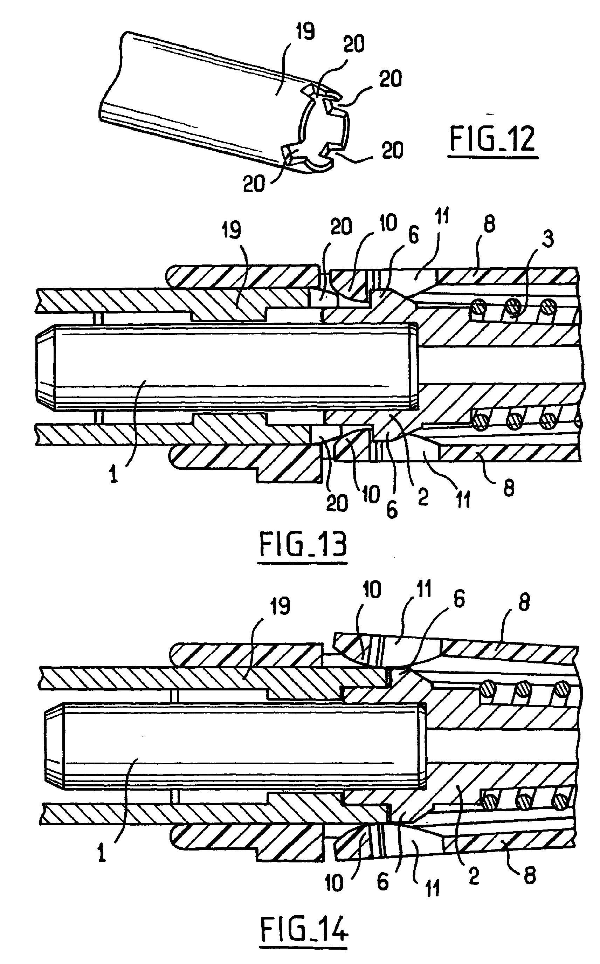

Le bossage 10, que l'on voit bien en figure 6A, forme à l'avant de la poutre 8, c'est-à-dire du côté de la face d'accouplement, une portée arrondie qui joue le rôle d'une came, comme cela sera décrit ultérieurement en référence aux figures 12 à 14, en provoquant la déformation élastique de la poutre 8 vers l'extérieur lorsqu'une pièce est déplacée axialement à l'intérieur du corps et prend appui sur l'avant de la poutre.

En d'autres termes, la forme d'encliquetage du corps comprend une came avant, constituée par la portée arrondie formée par le bossage 10, qui provoque son escamotage en cas d'insertion axiale dans le corps d'une pièce prenant appui sur cette came avant.

Cette ouverture radiale 11 est notamment délimitée par une surface de butée 12 qui, comme on le voit à la figure 2, sert d'appui à la face frontale 6c de l'ergot.

La section de l'ouverture 11 comprend une partie arrière 11a sensiblement rectangulaire dont la largeur est supérieure à celle de chaque ergot 6 et une partie avant 11b plus étroite, réunie à la partie arrière par deux parois 13 convergentes.

La partie avant 11b comprend une portion délimitée par deux autres parois convergentes 14 séparées, à leurs extrémités les plus proches l'une de l'autre, d'une distance e sensiblement égale à la largeur de chaque ergot.

Chaque paroi convergente 14 est prolongée par un dégagement 15 qui aboutit à la face de butée 12 précédemment définie.

Comme on le comprend aisément à la vue de la figure 2A, l'engagement du porte-ferrule 2 dans le corps 4 par l'ouverture 4a entraîne tout d'abord la mise en contact de la rampe 6a de deux des ergots opposés avec le bossage 10 des deux poutres élastiques opposées du corps.

Le glissement de la rampe 6a inclinée sur le bossage repousse les extrémités avant 8b des poutres élastiques 8 vers l'extérieur et permet le passage des ergots au-delà de la face de butée 12 des ouvertures 11 des bossages, comme représenté à la figure 2A.

L'encliquetage du porte-ferrule 2 dans le corps 4 est ainsi réalisé.

A ce stade de l'insertion du porte-ferrule dans le corps, qui correspond à la figure 2A, le ressort hélicoïdal 3, qui a pour fonction de repousser le porte-ferrule et la ferrule en direction de la face d'accouplement du corps, se trouve comprimé entre le porte-ferrule et le corps par la force d'insertion mais chaque ergot 6 est emprisonné dans l'ouverture 11 du bossage correspondant, dans la partie arrière 11a de cette ouverture, c'est-à-dire avec un certain jeu angulaire résultant de la différence de largeur existant entre l'ergot et la partie arrière de l'ouverture.

Lorsqu'on relâche la ferrule et qu'on cesse par conséquent d'exercer une force sur celle-ci en direction de l'arrière de l'élément de connecteur, le ressort hélicoïdal 3 repousse le porte-ferrule en direction de la face d'accouplement, comme visible sur la figure 2B.

Les faces radiales 6d de chaque ergot encliqueté se trouvent alors guidées par les parois convergentes 13 de rétrécissement vers la partie avant 11b de l'ouverture.

La face frontale 6c de chaque ergot vient en appui contre la face de butée 12 de l'ouverture 11 en étant légèrement coincée entre les faces convergentes 14 et le porte-ferrule est ainsi positionné angulairement de manière très précise dans le corps.

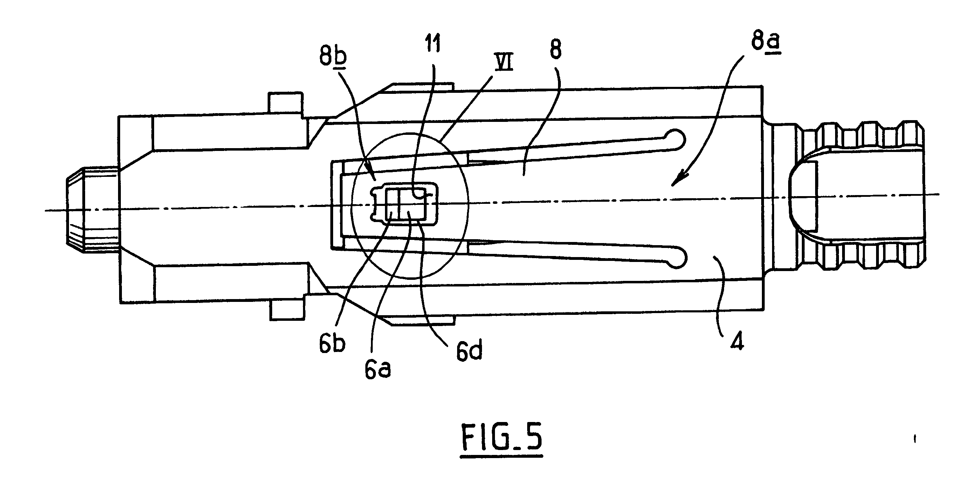

Lorsque l'élément de connecteur est ensuite connecté à un autre élément de connecteur (non représenté), la ferrule vient au contact de la ferrule en regard de l'autre élément de connecteur et l'appui mutuel des deux ferrules se traduit par un recul de chacune d'elles, comme on le voit aux figures 5 et 6A.

Ainsi, l'ergot 6 emprisonné dans chaque ouverture 11 quitte la partie avant 11b de cette ouverture et retrouve une certaine liberté de mouvement dans la partie arrière 11a.

Les deux ferrules alignées dans deux éléments de connecteurs ainsi connectés forment, de ce fait, un ensemble rigide qui peut flotter à l'intérieur des corps des deux éléments de connecteurs.

Cette possibilité de flottement est accrue si, comme on le voit à la figure 2, il subsiste un léger jeu radial 16 entre le porte-ferrule et chaque bossage 10.

Toutefois, ce jeu radial 16 peut être éliminé si on prévoit une élasticité suffisante des poutres 8.

La forme arrondie du bossage 10 en arrière de la face de butée 12 a pour objet de permettre le démoulage du corps qui peut ainsi être réalisé d'un seul tenant par moulage de matière plastique, bien qu'aucune ouverture ne soit prévue à l'arrière du corps.

En d'autres termes, la forme d'encliquetage du corps comprend une came arrière, constituée par l'arrondi du bossage, qui provoque son escamotage en cas d'extraction, depuis l'intérieur du corps, d'une pièce prenant appui sur ladite came arrière.

Pour assurer la rigidité du corps en dépit de la présence des poutres élastiques découpées dans sa paroi latérale, on a en outre prévu des nervures 17 à l'intérieur du corps entre les deux poutres élastiques.

Chaque nervure 17 se termine par une face avant 17a inclinée qui sert de butée arrière aux ergots pour limiter leur débattement axial dans le corps et le recul de la fibre dans le câble.

Au vu des figures 2A et 2B, on comprend aisément que l'écartement des ergots pour modifier l'orientation angulaire du support de ferrule par rapport au corps, peut s'effectuer très facilement en introduisant un outil par l'ouverture du corps, entre sa paroi intérieure et la ferrule, pour écarter les poutres 8 en prenant appui sur les formes arrondies des bossages 10, en avant de la face de butée 12.

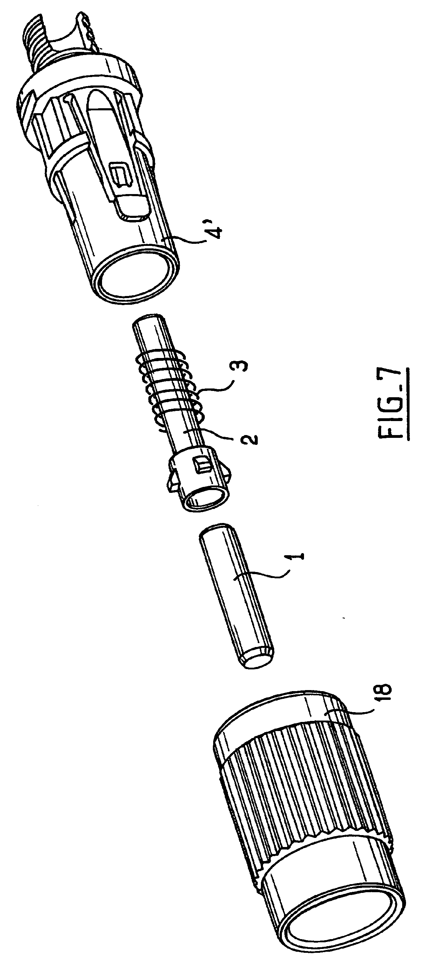

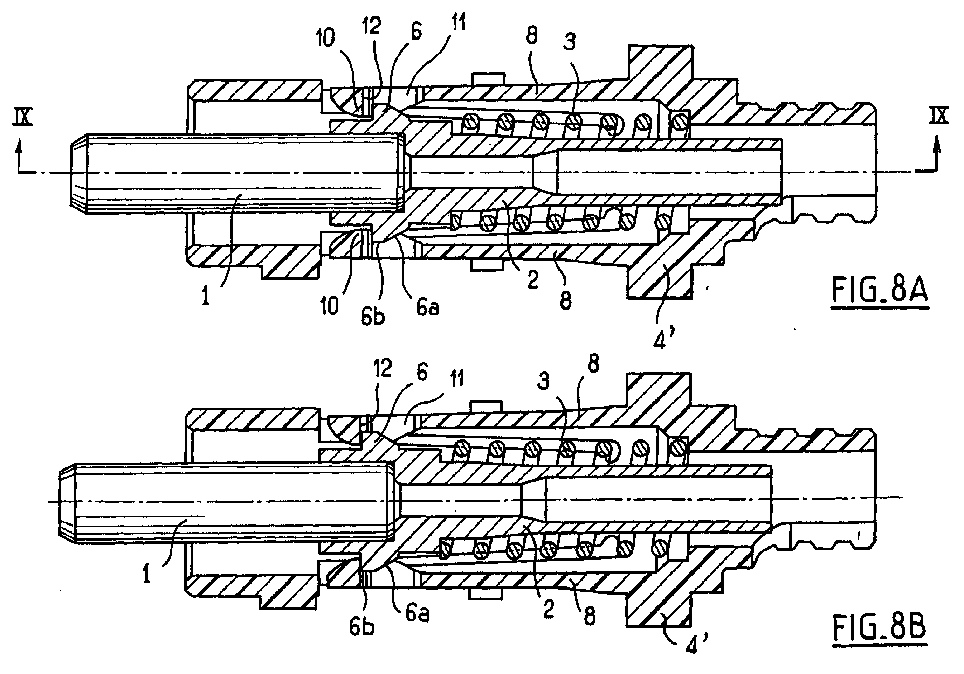

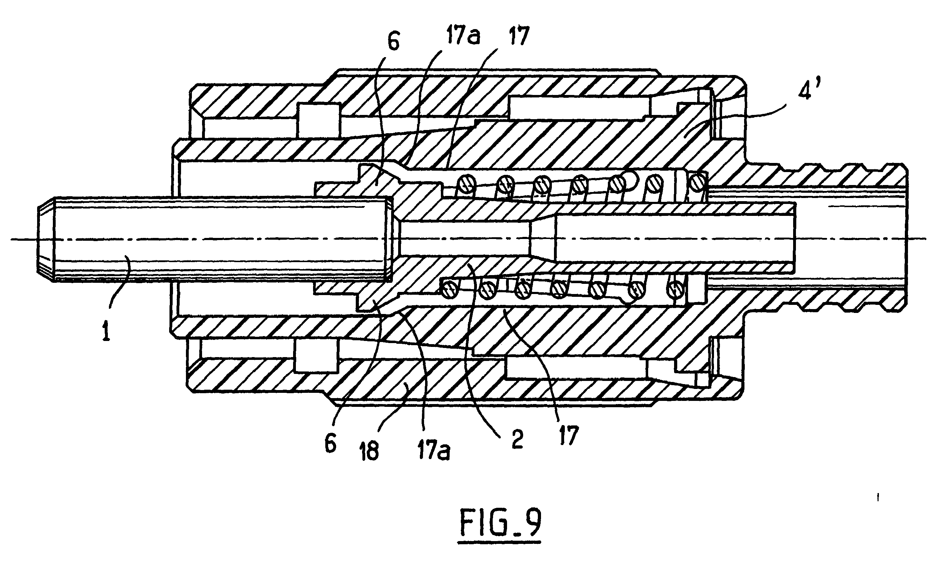

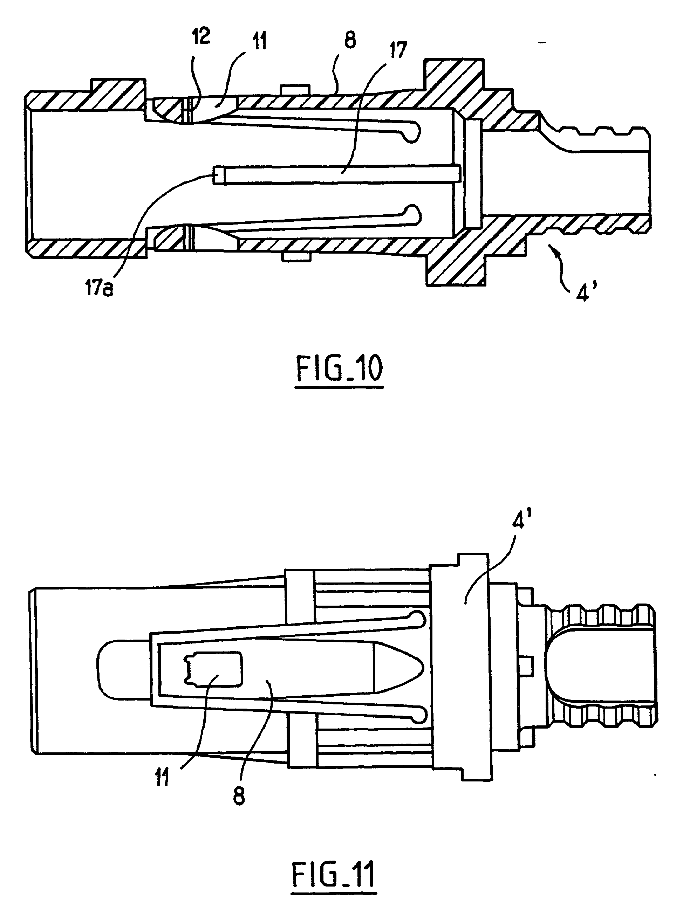

Dans le mode de réalisation des figures 7 à 11, l'élément de connecteur est du type FC.

On y retrouve les parties constitutives déjà décrites, à savoir la ferrule 1, le porte-ferrule 2, le ressort 3 et le corps 4'.

Dans ce type de connecteur, il existe une quatrième partie constitutive qui est une bague d'accouplement 18 dont les détails de forme ne seront pas décrits ici.

L'élément de connecteur comporte deux poutres élastiques 8 comportant chacune un bossage 10 traversé par une ouverture 11 comme cela a été décrit en référence au premier mode de réalisation.

Les différentes parties constituant les formes d'encliquetage sur le support de ferrule ainsi que sur le corps de l'élément de connecteur sont identiques à celles du mode de réalisation précédent et portent les mêmes numéros de référence.

Les figures 12 à 14 représentent l'avant d'un outil d'orientation 19 introduit dans l'élément de connecteur pour agir sur les formes d'encliquetage afin de les escamoter.

Sur la perspective fournie par la figure 12, on voit que l'extrémité avant de l'outil est chanfreinée et comporte quatre encoches 20 espacées deux à deux de 90°.

Chacune de ces encoches 20 est apte à recevoir l'un des ergots 6 du porte-ferrule.

Le diamètre intérieur de l'outil est légèrement supérieur à celui de la ferrule mais son diamètre extérieur est légèrement inférieur à celui du corps de l'élément de connecteur.

De ce fait, on peut introduire, dans le corps de l'élément de connecteur et par son ouverture avant, l'avant de l'outil d'orientation qui s'engage alors entre la ferrule et le corps.

A la figure 13, on voit que l'extrémité avant chanfreinée de l'outil vient au contact des bossages 10 des poutres 8, sur leur portée arrondie qui constitue une came avant.

Lorsque l'outil est complètement engagé dans le corps, comme représenté à la figure 14, les poutres élastiques sont déformées vers l'extérieur et chacune des formes d'encliquetage constituée par le bossage 10 muni de l'ouverture 11 se trouve escamotée.

L'ensemble ferrule est alors angulairement déconnecté du corps mais se trouve angulairement solidarisé à l'outil d'orientation dont les quatre encoches coopèrent chacune avec un ergot de l'ensemble ferrule.

En faisant tourner l'outil d'orientation autour de son axe longitudinal, on entraîne l'ensemble ferrule en rotation.

Il suffit ensuite de retirer l'outil d'orientation lorsque l'ensemble ferrule a effectué un, deux ou trois quarts de tour et que deux de ses ergots se trouvent à nouveau en regard des ouvertures 11 pour provoquer l'encliquetage des ergots dans les ouvertures 11.

On voit que grâce à cette opération simple, on a pu procéder à l'orientation de la ferrule dans le corps sans démonter aucune pièce de l'élément de connecteur.

Dans le mode de réalisation de la figure 15, chaque ergot 6' comporte une partie avant cylindrique 6'b et une partie arrière tronconique 6'a, comme précédemment décrit.

La partie avant cylindrique 6'b ne comporte pas une face frontale plane comme dans les modes réalisation précédents mais une face frontale 6'c en forme de dièdre.

L'ouverture 11' prévue dans le bossage de la poutre comporte une partie arrière 11'a à section rectangulaire et une partie avant 11'b à section triangulaire qui forme un dièdre de même ouverture que celui de la face frontale 6'c de l'ergot et contre lequel ledit ergot vient prendre appui lorsque l'ensemble ferrule est repoussé par le ressort.

Dans ce mode de réalisation, comme dans les précédents, les formes d'encliquetage de l'ensemble ferrule et du corps assurent à la fois les fonctions de butée axiale empêchant l'ensemble ferrule de sortir du corps et le blocage en rotation de ensemble ferrule par rapport au corps.

Dans un autre mode de réalisation (non représenté), la butée axiale pourrait être constituée par un moyen séparé par exemple une forme d'encliquetage non réversible et seul le blocage en rotation de l'ensemble ferrule par rapport au corps serait réalisé, conformément à l'invention, par des moyens d'encliquetage escamotables de façon réversible.

Il est bien entendu que les modes de réalisation qui viennent d'être décrits ne présentent aucun caractère limitatif et qu'ils pourront recevoir toutes modifications désirables sans sortir pour cela du cadre de l'invention.

## Revendications

1. Elément de connecteur optique ayant une face d'accouplement avec un autre élément de connecteur optique et comprenant :
a) une ferrule (1) destinée à recevoir la portion d'extrémité d'une fibre optique,
b) un porte-ferrule (2) formant avec la ferrule un ensemble ferrule d'un seul tenant,
c) un corps (4, 4') recevant ledit ensemble ferrule et ouvert du côté de la face d'accouplement pour permettre l'introduction dudit ensemble ferrule,
d) un moyen élastique (3) tendant à repousser vers l'extérieur du corps, en direction de la face d'accouplement de l'élément de connecteur, l'ensemble ferrule introduit dans le corps,
e) un moyen de blocage en rotation de l'ensemble ferrule par rapport au corps,
f) des formes d'encliquetage (6, 6') sur l'ensemble ferrule et
g) des formes d'encliquetage (10, 11) sur le corps,
**caractérisé par le fait que** les formes d'encliquetage (10, 11) du corps sont situées, par rapport au moyen élastique, du côté de la face d'accouplement et sont montées sur le corps de manière à pouvoir s'escamoter de manière réversible, afin de permettre une rotation de l'ensemble ferrule dans ledit corps sans retirer l'ensemble ferrule dudit corps.

2. Elément de connecteur selon la revendication 1, **caractérisé par le fait que** les formes d'encliquetage (10, 11) du corps sont supportées par des parties (8) élastiquement déformables du corps.

3. Elément de connecteur selon la revendication 2, **caractérisé par le fait que** les parties élastiquement déformables du corps supportant les formes d'encliquetage sont constituées par les extrémités libres de poutres élastiques (8) découpées longitudinalement dans l'épaisseur de la paroi du corps.

4. Elément de connecteur selon l'une quelconque des revendications 1 à 3,
**caractérisé par le fait que** les formes d'encliquetage du corps et de l'ensemble ferrule constituent une butée axiale (6c, 12) qui limite le déplacement axial de l'ensemble ferrule dans le corps en direction de la face d'accouplement de l'élément de connecteur.

5. Elément de connecteur selon l'une quelconque des revendications 1 à 4,
**caractérisé par le fait que** les formes d'encliquetage de l'ensemble ferrule sont constitués par une pluralité d'ergots (6, 6') régulièrement répartis autour du porte-ferrule.

6. Elément de connecteur selon la revendication 5, **caractérisé par le fait que** chaque ergot (6, 6') comprend une rampe inclinée arrière (6a, 6'a), une face latérale avant, (6b, 6'b), deux faces radiales (6d) et une face frontale (6c, 6'c).

7. Elément de connecteur selon l'une quelconque des revendications 1 à 6, **caractérisé par le fait que** chacune des formes d'encliquetage du corps comprend une came avant (10) qui provoque son escamotage en cas d'insertion axiale dans le corps d'une pièce prenant appui sur cette came avant.

8. Elément de connecteur selon l'une quelconque des revendications 1 à 6, **caractérisé par le fait que** chacune des formes d'encliquetage du corps comprend une came arrière (10) qui provoque son escamotage en cas d'extraction, depuis l'intérieur du corps, d'une pièce prenant appui sur ladite came arrière.

9. Elément de connecteur selon l'une quelconque des revendications 1 à 8, **caractérisé par le fait que** chaque forme d'encliquetage du corps comprend une ouverture radiale (11) et que la section de l'ouverture (11) comprend une partie arrière (11a) sensiblement rectangulaire dont la largeur est supérieure à celle de chaque ergot (6) et une partie avant (11b) plus étroite, réunie à la partie arrière par deux parois (13) convergentes, la partie avant (11b) comprenant une portion délimitée par deux autres parois convergentes (14) séparées, à leurs extrémités les plus proches l'une de l'autre, d'une distance (e) sensiblement égale à la largeur de chaque ergot et une face de butée (12) destinée à servir d'appui à la face frontale (6c) de l'ergot.

10. Elément de connecteur selon la revendication 6, **caractérisé par le fait que** la face frontale (6'c) de l'ergot (6') est en forme de dièdre.

11. Elément de connecteur selon les revendications 7 et 10, **caractérisé par le fait que** la forme d'encliquetage du corps comprend une ouverture radiale et que la section de l'ouverture (11') comporte une partie arrière (11'a) à section rectangulaire et une partie avant (11'b) à section triangulaire, qui forme un dièdre de même ouverture que celui de la face frontale (6'c) de l'ergot (6').

## Claims

1. An optical connector element having a coupling face for coupling to another optical connector element and comprising:
a) a ferrule (1) serving to receive the end portion of an optical fiber;
b) a ferrule holder (2) co-operating with the ferrule to form a continuous ferrule assembly;
c) a body (4, 4') receiving said ferrule assembly and open on the coupling face end so as to enable said ferrule assembly to be inserted into it;
d) resilient means (3) tending to urge the ferrule assembly inserted into the body so that it is pushed back out of said body towards the coupling face of the connector element;
e) means for preventing the ferrule assembly from rotating relative to the body;
f) snap-fastening shapes (6, 6') on the ferrule assembly; and
g) snap-fastening shapes (10, 11) on the body;
said connector element being **characterized by** the fact that the snap-fastening shapes (6, 6') on the body are situated on that side of the resilient means which is closer to the coupling face, and they are mounted on the body in a manner such that they can retract reversibly in order to allow the ferrule assembly to rotate in said body without withdrawing the ferrule assembly from said body.

2. A connector element according to claim 1, **characterized by** the fact that the snap-fastening shapes (6, 6') on the body are supported by elastically-deformable portions (8) of the body.

3. A connector element according to claim 2, **characterized by** the fact that the elastically-deformable portions of the body that support the snap-fastening shapes are constituted by the free ends of resilient beams (8) cut out longitudinally in the thickness of the wall of the body.

4. A connector element according to any one of claims 1 to 3, **characterized by** the fact that the snap-fastening shapes on the body and on the ferrule assembly constitute an axial abutment (6c, 12) which limits the axial displacement of the ferrule assembly in the body towards the coupling face of the connector element.

5. A connector element according to any one of claims 1 to 4, **characterized by** the fact that the snap-fastening shapes on the ferrule assembly are constituted by a plurality of lugs (6, 6') uniformly distributed about the ferrule holder.

6. A connector element according to claim 5, **characterized by** the fact that each lug (6, 6') comprises a rear ramp (6a, 6'a), a front side face (6b, 6'b) and an end face (6c, 6'c).

7. A connector element according to any one of claims 1 to 6, **characterized by** the fact that each of the snap-fastening shapes on the body comprises a front cam (10) which causes it to retract when a part bearing against said front cam is inserted axially into the body.

8. A connector element according to any one of claims 1 to 6, **characterized by** the fact that each of the snap-fastening shapes on the body comprises a rear cam (10) which causes it to retract when a part bearing against said rear cam is extracted from inside the body.

9. A connector element according to any one of claims 1 to 8, **characterized by** the facts that each snap-fastening shape on the body is provided with a radial opening (11), and that the opening section (11) comprises a rear portion (11a) that is substantially rectangular and whose width is greater than that of each lug (6), and a narrower front portion (11b) connected to the rear portion by two convergent walls (13), the front portion (11b) comprising a portion delimited by two other convergent walls (14) separated at their ends that are closer together by a distance (e) substantially equal to the width of each lug, and an abutment face (12) serving to act as an abutment for the end face (6c) of the lug.

10. A connector element according to claim 6, **characterized by** the fact that the end face (6'c) of the lug (6') is V-shaped.

11. A connector element according to claims 7 and 10, **characterized by** the facts that the snap-fastening shape on the body is provided with a radial opening, and that the opening section (11') comprises a rear portion (11'a) of rectangular section, and a front portion (11'b) of triangular section that forms a V-shape of the same aperture as that of the end face (6'c) of the lug (6').

## Patentansprüche

1. Optisches Verbinderelement, das eine Koppelschnittstelle für ein anderes optisches Verbinderelement aufweist, mit:
a) einer Hülse (1), die dazu bestimmt ist, den Endabschnitt einer optischen Faser aufzunehmen,
b) einem Hülsenträger (2), der mit der Hülse eine zusammenhängende Hülseneinheit bildet,
c) einen Körper (4, 4'), der die genannte Hülseneinheit aufnimmt und auf der Seite der Koppelschnittstelle offen ist, um das Einführen der genannten Hülseneinheit zu ermöglichen,
d) einem elastischen Mittel (3), das die Tendenz hat, die in den Körper eingeführte Hülseneinheit nach außen in bezug auf den Körper in Richtung auf die Koppelschnittstelle des Verbinderelements zurückzudrücken,
e) einem Mittel zur Verdrehsicherung der Hülseneinheit in bezug auf den Körper,
f) Raststrukturen (6, 6') an der Hülseneinheit, und
g) Raststrukturen (10, 11) an dem Körper,
**dadurch gekennzeichnet, daß** die Raststrukturen (10, 11) des Körpers sich in bezug auf das elastische Mittel auf der Seite der Koppelschnittstelle befinden und so an dem Körper montiert sind, daß sie reversibel ausweichen können, um eine Drehung der Hülseneinheit in dem genannten Körper zu ermöglichen, ohne daß die Hülseneinheit aus dem Körper herausgezogen wird.

2. Verbinderelement nach Anspruch 1, **dadurch gekennzeichnet, daß** die Raststrukturen (10, 11) des Körpers an elastisch verformbaren Teilen (8) des Körpers gehalten sind.

3. Verbinderelement nach Anspruch 2, **dadurch gekennzeichnet, daß** die elastisch verformbaren Teile des Körpers, die die Raststrukturen tragen, durch die freien Enden von elastischen Balken (8) gebildet werden, die in Längsrichtung aus der Dicke der Wand des Körpers ausgeschnitten sind.

4. Verbinderelement nach einem der Ansprüche 1 bis 3, **dadurch gekennzeichnet, daß** die Raststrukturen des Körpers und der Hülseneinheit einen axialen Anschlag (6c, 12) bilden, der die axiale Bewegung der Hülseneinheit in dem Körper in Richtung auf die Koppelschnittstelle des Verbinderelements begrenzt.

5. Verbinderelement nach einem der Ansprüche 1 bis 4, **dadurch gekennzeichnet, daß** die Raststrukturen der Hülseneinheit durch mehrere Zapfen (6. 6') gebildet werden, die gleichmäßig um den Hülsenträger herum verteilt sind.

6. Verbinderelement nach Anspruch 5, **dadurch gekennzeichnet, daß** jeder Zapfen (6, 6') eine geneigte hintere Rampe (6a, 6'a), eine vordere Seitenwand (6b, 6'b), zwei radiale Flächen (6d) und eine Frontfläche (6c, 6'c) aufweist.

7. Verbinderelement nach einem der Ansprüche 1 bis 6, **dadurch gekennzeichnet, daß** jede der Raststrukturen des Körpers einen vorderen Nocken (10) aufweist, der das Ausweichen bewirkt, wenn ein sich an diesen vorderen Nocken anlegendes Bauteil axial in den Körper eingeführt wird.

8. Verbinderelement nach einem der Ansprüche 1 bis 6, **dadurch gekennzeichnet, daß** jede der Raststrukturen des Körpers einen hinteren Nocken (10) aufweist, der das Ausweichen bewirkt, wenn ein an dem genannten hinteren Nocken anliegendes Bauteil aus dem Inneren des Körpers herausgezogen wird.

9. Verbinderelement nach einem der Ansprüche 1 bis 8, **dadurch gekennzeichnet, daß** jede Raststruktur des Körpers eine radiale Öffnung (11) aufweist und daß der Querschnitt der Öffnung (11) einen im wesentlichen rechteckigen hinteren Teil (11a), dessen Breite größer ist als die jedes Zapfens (6), und einen engeren vorderen Teil (11b) aufweist, der mit dem hinteren Teil über zwei konvergente Wände (13) verbunden ist, wobei der vordere Teil (11b) einen Abschnitt, der durch zwei andere konvergente Wände (14) begrenzt ist, die an ihren einander am nächsten liegenden Enden einen Abstand (e) zueinander haben, der im wesentlichen gleich der Breite jedes Zapfens ist, und eine Anschlagfläche (12) aufweist, die dazu bestimmt ist, als Anschlag für die Frontfläche (6c) des Zapfens zu dienen.

10. Verbinderelement nach Anspruch 6, **dadurch gekennzeichnet, daß** die Frontfläche (6'c) des Zapfens (6') V-förmig ist.

11. Verbinderelement nach den Ansprüchen 7 und 10, **dadurch gekennzeichnet, daß** die Raststruktur des Körpers eine radiale Öffnung aufweist, und daß der Querschnitt der Öffnung (11') einen hinteren Teil (11'a) mit rechteckigem Querschnitt und einen vorderen Teil (11'b) mit dreieckigern Querschnitt hat, der ein V mit dem gleichen Öffnungswinkel wie derjenige der Frontfläche (6'c) des Zapfens (6') bildet.
